# EUROPEAN PATENT SPECIFICATION

(11) **EP 0 899 188 B1**
(45) Date of publication and mention of the grant of the patent: **14.06.2006**
(21) Application number: 98115940.3
(22) Date of filing: 24.08.1998
(51) Int. Cl.: B62M 25/08, B62M 11/14

(54) **Bicycle shift control device**
Steuerungseinrichtung für eine Fahrradgangschaltung
Dispositif de commande de changement de vitesses pour bicyclette

(30) Priority: 28.08.1997 JP 23204797
(43) Date of publication of application: 03.03.1999
(73) Proprietor: SHIMANO INC., Sakai-shi, Osaka 590-8577 (JP)
(72) Inventor: Kimura, Yoshiki, Shimonoseki-shi, Yamaguchi (JP)
(74) Representative: Herrmann-Trentepohl, Werner

(56) References cited:
- US-A- 5 261 858
- US-A- 5 551 315
- US-A- 5 599 244

## Description

The present invention relates to a method for shifting a shift control device, and more particularly to for automatically switching a plurality of speed steps of a shifting mechanism in accordance with the sensed speed of a bicycle.

Known bicycles are equipped with shifting mechanisms comprising a plurality of speed steps. The shifting mechanisms may be external shifting mechanisms or internal shifting mechanisms. An external shifting mechanism comprises, for example, a hub cog having a plurality of sprockets mounted on the rear wheel, and a derailleur for moving the chain between the sprockets. An internal shifting mechanism has an internal shifting hub. These shifting mechanisms are connected with the aid of shifting cables to shift levers attached to handles or the like. In bicycles provided with such shifting mechanisms, optimum speed steps suited to the riding conditions can be selected by the manual operation of the shift levers.

Shift levers are often placed close to the brake levers on a handle, however. During deceleration, the brake levers and the shift levers must be operated simultaneously, impairing shifting. In view of this, a shift control device for automatically switching speed steps in accordance with the speed of a bicycle has been proposed (Japanese Laid-Open Patent Application 8-113131). In this shift control device, the shift timing is varied depending on the magnitude of the increase or decrease in speed. In this case, the goal is to speed up the shift timing during fast acceleration or deceleration, reducing rider discomfort.

The aforementioned conventional mechanism allows the shift timing to be controlled not only on the basis of speed but also on the basis of acceleration. A need therefore exists for providing acceleration sensors or setting up routines for calculating acceleration on the basis of speed. Consequently, there is a possibility that complicated automatic shift control will be involved and that control response will be slower. In addition, control procedures are further complicated because the speed steps must be determined on the basis of complex two-dimensional maps when both speed and acceleration are used.

An object of the present invention is to provide a bicycle shift control device that is unlikely to cause discomfort during a shifting procedure based on a simple control routine.

The method of a preferred embodiment according to the features of claim 1 of the present invention, which is a method for automatically switching a plurality of speed steps in a shifting mechanism of a bicycle shift control device in accordance with the sensed speed of the bicycle comprises bicycle speed input means, first upshift means, first downshift means, upshift mode setting means, second downshift means, downshift mode setting means, and second upshift means. The bicycle speed input means is a means for entering the sensed bicycle speed. The first upshift means is a means for switching the speed steps from a lower step to a higher step when the bicycle is in first speed. The first downshift means is a means for switching the speed steps from a higher step to a lower step when the bicycle is in second speed. The upshift mode setting means is a means for setting an upshift mode when the first upshift means is actuated, and the speed step is switched from a lower step to a higher step. The second downshift means is a means for switching the speed steps from a higher step to a lower step when the upshift mode has been set, and the bicycle speed reaches a third speed which is lower than the second speed. The downshift mode setting means is a means for setting a downshift mode when the first downshift means has been actuated, and the speed step is switched from a higher step to a lower step. The second upshift means is a means for switching the speed steps from a lower step to a higher step when the downshift mode has been set, and the bicycle speed reaches a fourth speed which is higher than the first speed.

With this method of a shift control device, the speed steps are switched one step higher when the bicycle starts moving, accelerates, and reaches first speed. An upshift mode is established. During such an upshift mode, the speed steps are kept in this state until they are in third speed (which is lower than the second speed), and are switched to a lower step when the third speed is reached. Meanwhile, the speed steps are switched to a lower step when the speed reaches the second step during deceleration if no downshift mode has been established. A downshift mode is thus established. During such a downshift mode, the speed steps are kept in this state until they reach the fourth speed (which is higher than the first speed), and are switched to a higher step when the fourth speed is engaged.

In this case, a single act of shifting establishes an upshift mode or a downshift mode, shifting is performed at a speed (fourth or third) different from a regular shifting speed (first or second), and the shift timing is changed. Specifically, the shift timing is slowed down such that the chain is moved to a lower, third speed when a downshift is performed in the downshift mode, and to a higher, fourth speed when an upshift is performed in the downshift mode, with shifting being performed at higher speeds during upshifting and at lower speeds during downshifting. The regular shift timing is thus speeded up. As a result, idle post-shifting can be reduced, and comfortable shifting can be performed in accordance with fast shift timing. In addition, comfortable shifting can be accomplished by a simple control procedure because the shift timing is established on the basis of speed alone.

The method of a second embodiment for automatically switching a plurality of speed steps of a shifting mechanism in accordance with the sensed speed of the bicycle, further comprises upshift mode release means, and downshift mode release means. The upshift mode release means is a means for releasing the upshift mode. The downshift mode release means is a means for releasing the downshift mode.

In this arrangement, means for canceling established downshift and upshift modes are provided in addition to the preferred embodiment. Even when these modes have been established, they are canceled once prescribed conditions are met, and the first or second gear is selected in accordance with the regular fast timing.

Furthermore, the bicycle shift control device as defined in connection with the second embodiment provides that the upshift mode release means cancels the upshift mode in a fifth speed, which is higher than the first speed, and the downshift mode release means cancels the downshift mode in a sixth speed, which is lower than the second speed. In this case, chattering near the shift speed is less likely to occur because each mode is canceled in accordance with a timing that is slower than the regular shift timing.

The bicycle shift control device furthermore provides that the upshift mode release means and downshift mode release means have, respectively, a fifth speed group and a sixth speed group provided with respective settings for the fifth and sixth speeds of each of the speed steps. In this case, each mode can be canceled by a simple control routine in which the current bicycle speed is compared with speed steps grouped into speed groups.

The bicycle shift control device furthermore provides that the downshift mode release means cancels the downshift mode when the bicycle speed reaches a speed that conforms to any of the sixth speeds corresponding to the speed steps of the sixth speed group, or when the first or second upshift means is actuated. In this case, the downshift mode can be securely canceled.

The bicycle shift control device furthermore provides that the upshift mode release means cancels the upshift mode when the bicycle speed reaches a speed that conforms to any of the fifth speeds corresponding to the speed steps of the fifth speed group, or when the first or second downshift means is actuated. In this case, the upshift mode can be securely canceled.

The bicycle shift control device furthermore provides that the first and second upshift means have, respectively, a first speed group and a fourth speed provided with respective settings for the first and fourth speeds, which correspond to an upshift at each speed step; and the first and second downshift means have, respectively, a second speed group and a third speed group provided with respective settings for second and third speeds, which correspond to a downshift at each speed step. In this case, shifting can be performed in accordance with a simple control routine in which the current bicycle speed is compared with speeds that correspond to speed steps grouped into speed groups.

The method of a third embodiment for automatically switching a plurality of speed steps of a shifting mechanism in accordance with the sensed speed of the bicycle, comprises bicycle speed input means, upshift means, first shift maintenance means, first downshift means, second shift maintenance means, and second downshift means. The bicycle speed input means is a means for entering the sensed bicycle speed. The upshift means is a means for upshifting the speed steps when the bicycle speed rises above speed A. The first shift maintenance means is a means for maintaining the upshifted speed steps when the bicycle speed has exceeded speed A but is still below a higher speed B. The first downshift means is a means for downshifting the speed steps maintained by the first shift maintenance means when the bicycle speed has dropped to speed C, wich is lower than speed A. The second shift maintenance means is a means for maintaining the upshifted speed steps when the bicycle speed has exceeded speed B and but is still below a higher speed D. The second downshift means is a means for downshifting the speed steps maintained by the second shift maintenance means when the bicycle speed has dropped to speed E, which is lower than speed B but higher than speed A.

The shift control device shifts up one step when the bicycle speed rises above speed A. The upshifted speed step is maintained while the bicycle speed remains above speed A but below speed B, and the speed step is also maintained while the bicycle speed remains below speed D. The device is downshifted one step when the bicycle speed drops to speed C while remaining below speed B, and a downshift is also performed when the bicycle speed drops to speed E after rising above B. In this case, the downshifting speed is lower (and the downshift timing is slower) than at a speed above a prescribed speed B while this speed is achieved with a single upshifting action. As a result, upshift-induced chattering is less likely to occur even when such upshifting is performed.

The method of a fourth embodiment for automatically switching a pluraltiy of speed steps of a shifting mechanism in accordance with the sensed speed of the bicycle, comprises bicycle speed input means, downshift means, first shift maintenance means, first upshift means, second shift maintenance means, and second upshift means. The bicycle speed input means is a means for entering the sensed bicycle speed. The downshift means is a means for downshifting the speed steps when the bicycle speed has dropped below speed A. The first shift maintenance means is a means for maintaining the downshifted speed steps when the bicycle speed has dropped below speed A but is still above a lower speed B. The first upshift means is a means for upshifting the speed steps maintained by the first shift maintenance means when the bicycle spped has risen to speed C, which is higher than speed A. The second shift maintenance means is a means for maintaining the upshifted speed steps when the bicycle speed has dropped below speed B but is still above a lower speed D.The second upshift means is a means for upshifting the speed steps maintained by the second shift maintenance means when the bicycle speed has risen to speed E, which is higher than speed B but lower than speed A.

The shift control device shifts down one step when the bicycle speed falls below speed A. The downshifted speed step is maintained while the bicycle speed remains below speed A but above speed B, and the speed step is also maintained while the bicycle speed remains above speed D. The device is upshifted one step when the bicycle speed rises to speed C while remaining above speed B, and an upshift is also performed when the bicycle speed rises to speed E after dropping below B. In this case, the upshifting speed is higher (and the downshift timing is slower) than at a speed below a prescribed speed B while this speed is achieved with a single downshifting action. As a result, downshift-induced chattering is less likely to occur even when such downshifting is performed.

Further features, advantages of the subject matter of the invention derive from the attached drawings showing preferred embodiments of the invention, in detail:
- Fig. 1: is a side view of a bicycle in which an embodiment of the present invention has been employed;
- Fig. 2: is an oblique view of the handle portion thereof;
- Fig. 3: is a block diagram of the structure of the control system:
- Fig. 4: is a diagram illustrating examples of speed tables;
- Fig. 5: is a longitudinal section of an interal shifting hub controlled in accordance with an embodiment of the present invention;
- Fig. 6: is a flow chart of the main routine of shift control;
- Fig. 7: is a flow chart of dial P routine;
- Fig. 8: is a flow chart of password registration routine;
- Fig. 9: is a flow chart of the automatic shift 1 routine;

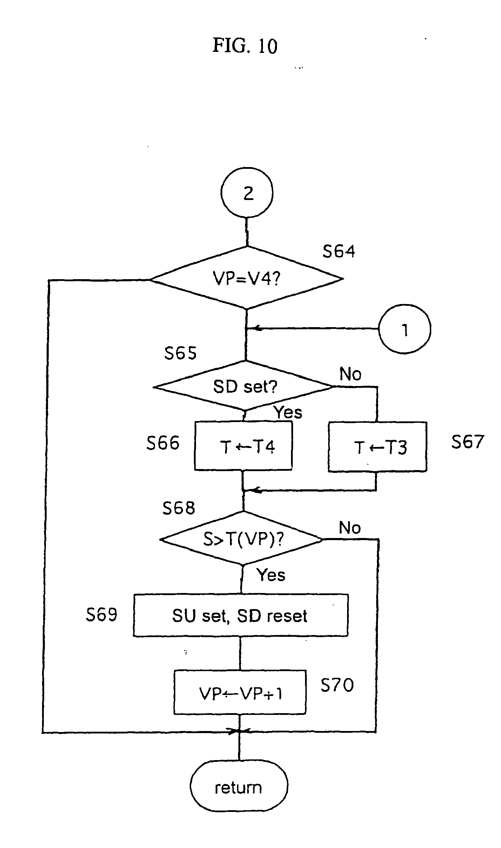

- Fig. 10: is a flow chart of the automatic shift 2 routine; and
- Fig. 11: is a flow chart of the manual shift routine.

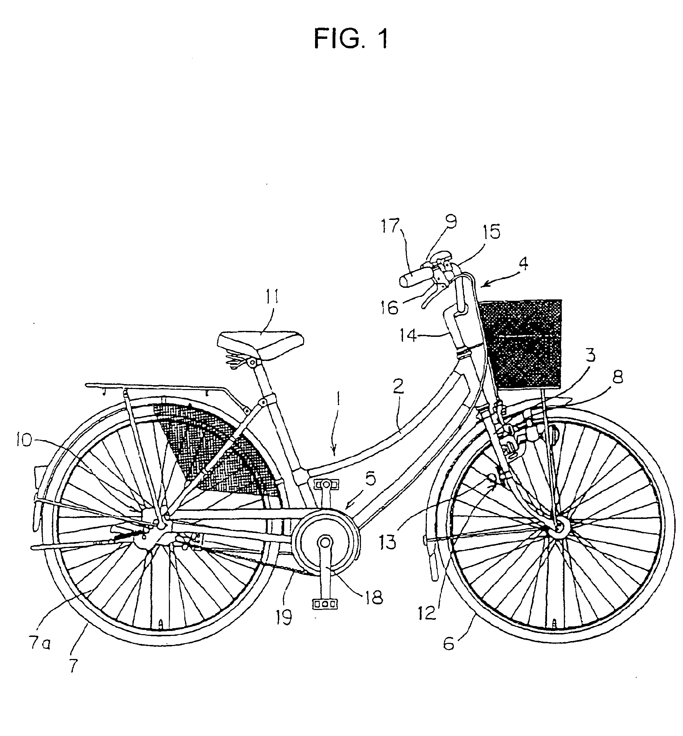

In Fig. 1, the bicycle in which an embodiment of the present invention is used is a recreational bicycle, comprising a frame 1 with a double loop type of frame unit 2 and front fork 3; a handle component 4; a drive component 5; a front wheel 6; a rear wheel 7 provided with a four-speed integral shifting hub 10; front and rear brake devices 8 (only the front one is shown in the figure); and a shift control element 9 for conveniently operating the internal shifting hub 10.

Various components, including a saddle 11 and a handle component 4, are attached to the frame 1. A bicycle speed sensor 12 furnished with a bicycle speed sensing lead switch is mounted on the front fork 3. This bicycle speed sensor 12 outputs a bicycle speed signal by sensing a magnet 13 mounted on the front wheel 6.

The handle component 4 has a handle stem 14 that is fixed to the upper portion of the front fork 3, and a handlebar 15 that is fixed to the handle stem 14. Brake levers 16 and grips 17 that constitute part of the brake devices 8 are mounted at either end of the handlebar 15. A shift control element 9 is mounted on the right-side brake lever 16.

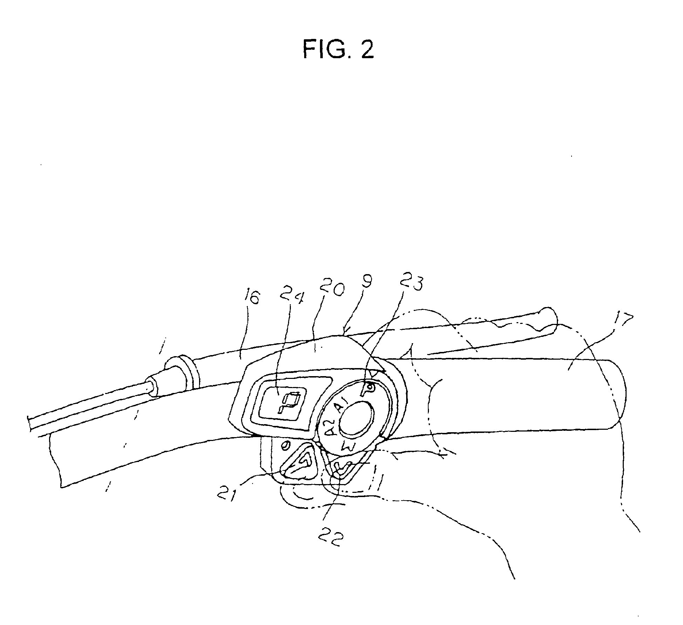

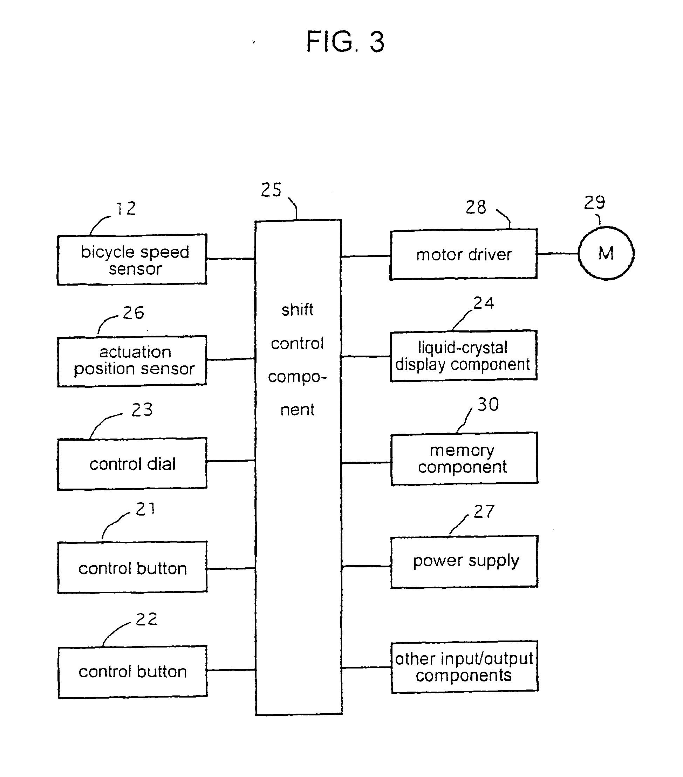

As shown in Fig. 2, the shift control element 9 has a control panel 20 formed integrally with the right-side (front-wheel) brake lever 16, two control buttons 21 and 22 disposed next to each other to the left and right on the lower portion of the control panel 20, a control dial 23 disposed above the control buttons 21 and 22, and a liquid-crystal display component 24 disposed to the left of the control dial 23. A shift control component 25 (Fig. 3) for controlling shifting operations is housed inside the control panel 20.

The control buttons 21 and 22 are triangular push buttons. The control button 21 on the left side is a button for performing shifts to a higher speed step from a lower speed step, while the control button 22 on the right side is a button for performing shifts to a lower speed step from a higher speed step. The control dial 23, which is a dial for switching among three shifting modes and a parking mode (P), has four stationary positions: P, A1, A2 and M. Here, the shift mode comprises an automatic shift 1 (A1) mode, an automatic shift 2 (A2) mode, and a manual shift (M) mode. The automatic shift 1 and 2 modes are for automatically shifting the internal shifting hub 10 by means of a bicycle speed signal from the bicycle speed sensor 12. The automatic shift 1 (A1) mode is a shift mode primarily used when automatic shifting is performed on level terrain, and the automatic shift 2 (A2) mode is a shifting mode primarily used when automatic shifting is performed on a slope. The automatic shift 2 (A2) mode is therefore set such that the shift timing for upshifts is faster than in the automatic shift 1 (A1) mode, whereas the shift timing for downshifts is slower than in the automatic shift 1 (A1) mode. The manual shift mode is for shifting the internal shifting hub 10 through the operation of the control buttons 21 and 22. The parking mode is for locking the internal shifting hub 10 and controlling the rotation of the rear wheel 7. The current riding speed is also displayed on the liquid-crystal display component 24, as is the speed step selected at the time of the shift.

The shift control component 25 comprises a microcomputer consisting of a CPU, a RAM, a ROM, and an I/O interface. As shown in Fig. 3, the shift control component 25 is connected to the bicycle speed sensor 12, an actuation position sensor 26 composed of a potentiometer (for example, a potentiometer that senses the actuation position of the internal shifting hub 10), the control dial 23, and the control buttons 21 and 22. The shift control component 25 is also connected to a power supply 27 (consisting of a battery), a motor driver 28, the liquid-crystal display component 24, a memory component 30, and other input/output components. A shift motor 29 is connected to the motor driver 28. The memory component 30 is composed of EEPROM or another type of rewritable nonvolatile memory. Various types of data, such as the password (PW) described below or the tire diameter, are sotred in the memory component. Also stored are six types of speed group data (hereinafter "speed tables") expressing respective relations between each speed step and the speeds during the automatic shift 1 (A1) mode and the automatic shift 2 (A2) mode. The shift control component 25 controls the motor 29 according to the various modes, and also controls the display of the liquid-crystal display component 24.

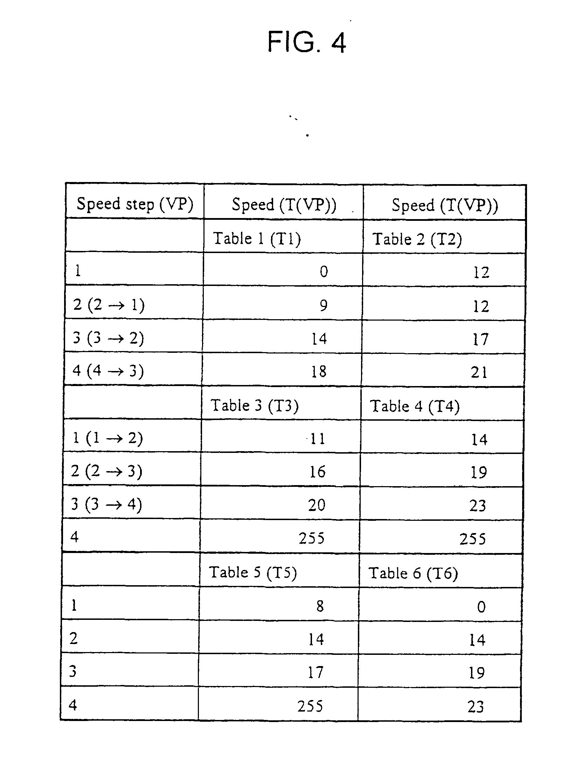

Fig. 4 depicts examples of the six speed tables used during the automatic shift I (A1) mode.

In Fig. 4, table 1 is a speed table containing a set speed (third gear) that corresponds to the downshifted speed steps achieved when the upshift mode described below has been set during the automatic shift 1 (A1) mode, and table 2 is a speed table containing a speed (second gear) that has been set during a regular downshift. Table 3 is a speed table containing a speed (first gear) that has been set during a regular upshift, and table 4 is a speed table containing a set speed (fourth gear) achieved during an upshift when the downshift mode described below has been set. Furthermore, table 5 ist a speed table containing a set speed (sixth gear) achieved when the downshift mode is canceled, and tabel 6 is a speed table containing a set speed (fifth gear) achieved when the upshift mode is canceled. Although the speed tables for the automatic shift 2 (A2) mode are not shown, the values in these tables tend to be lower overall than the corresponding speeds shown in Fig. 4. In each of these tables, the speed data are merely examples, and the numerical values thereof are not limited in any way.

The drive component 5 has a gear crank 18 that is provided to the lower portion (bottom bracket portion) of the frame body 2, a chain 19 that is wrapped around the gear crank 18, and the internal gear hub 10.

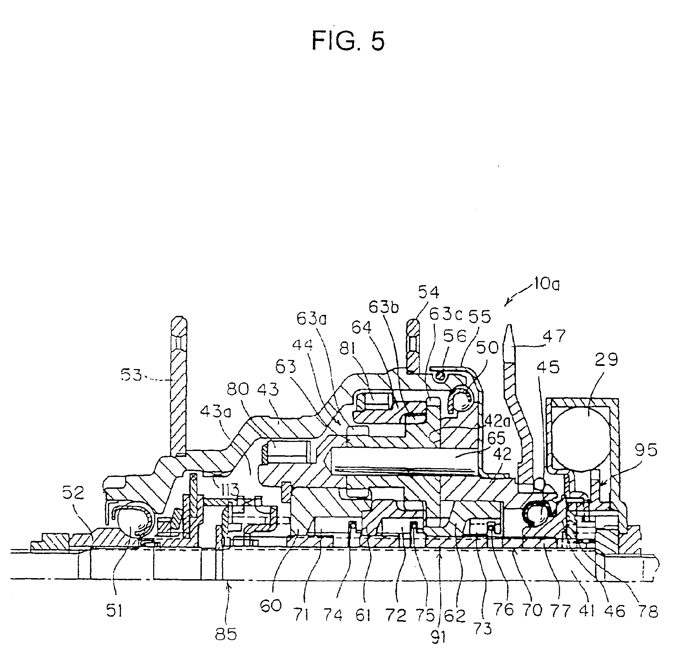

As shown in Fig. 5, the internal gear hub 10 primarily has a hub axle 41 that is fixed to the rear portion of the bicycle frame 1, a driver 42 that is located farther around the outer periphery at one end of the hub axle 41, a hub shell 43 that is located around the outer periphery of the hub axle 41 and driver 42, a planet gear mechanism 44 for transmitting motive power between the driver 42 and the hub shell 43, and an antitheft device 85. The planet gear mechanism 44 is made up of a total of four steps, one direct and three speed-increasing.

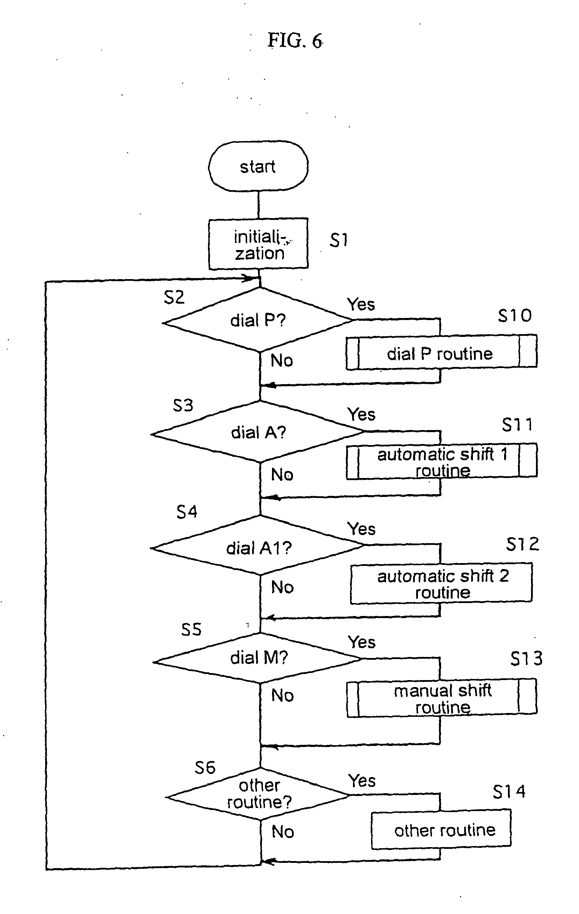

Fig. 6 is a flow chart illustrating the control routine of the shift control component 25.

When the power is turned on, initialization is performed in step S1. Here, circumference data used for calculating speed is set to a diameter of 26 inches, the speed step is set to the second gear (V2), and various flags are reset.

In step S2, a decision is made as to whether the control dial 23 has been set to the parking mode. In step S3, a decision is made as to whether the control dial 23 has been set to the automatic shift 1 mode. In step S4, a decision is made as to whether the control dial 23 has been set to the automatic shift 2 mode. In step S5, a decision is made as to whether the control dial 23 has been set to the manual shift mode. In step S6, a decision is made as to whether some other routine, such as tire diameter input, has been selected.

When the control dial 23 is turned to position P and is set to the parking mode, the operation proceeds from step S2 to step S10. In step S 10, the dial P routine shown in Fig. 12 is executed. When the control dial 23 is turned to position A1 and set to the automatic shift 1 mode, the operation proceeds from step S3 to step S11. In step S11, the automatic shift 1 routine shown in Figs. 14 and 15 is executed. When the control dial 23 is turned to position A2 and is set to the automatic shift 2 mode, the operation proceeds from step S4 to step S12. In step S12, the automatic shift 2 routine shown is executed in the same manner as the automatic shift 1 routine. When the control dial 23 is turned to position M and is set to the manual shift mode, the operation proceeds from step S5 to step S 13. In step S 13, the manual shift routine shown in Fig. 16 is executed. When another routine is selected, the operation proceeds from step S6 to step S 14, and the selected routine is executed.

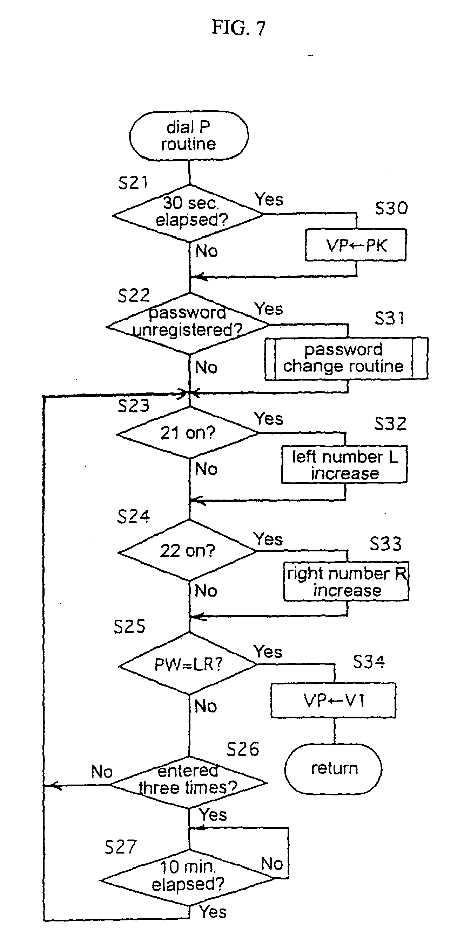

With the dial P routine in step S10, a decision is made as to whether 30 seconds have elapsed since the dial was turned to position P in step S21 in Fig. 7. In step S22, a decision is made as to whether a password PW has been registered. This decision is made on the basis of whether the password PW has already been stored in the memory component 30. If the password has already been registered, the operation proceeds to step S23.

In step S23 a decision is made as to whether the left control button 21 has been operated. The purpose of operating the control buttons 21 and 22 here is to enter the password for unlocking the locked internal shifting hub 10. In step S24 a decision is made as to whether the right control button 22 has been operated. In step S25 a decision is made as to whether the password LR entered by operation of the two control buttons 21 and 22 matches the registered password PW. If there is no match, the operation proceeds to step S26. In step S26 a decision is made as to whether the password still does not match after it has been entered three times. If it has yet to be entered three times, the operation returns to step S23, and reentering of the password is permitted. If the password does not match the registered password PW after being entered three times, the operation proceeds to step S27. In step S27, the system waits for 10 minutes to pass, and when 10 minutes have elapsed, the operation returns to step S23, and reentering of the password is permitted.

Once 30 seconds have elapsed since the dial was turned to position P, the operation proceeds from step S21 to step S30. In step S30, the shift motor 29 is driven by the motor driver 28, and the actuation position VP is set to the locked position PK.

In addition, the hub shell 43 is locked by being coupled directly with the hub axle 41, so the rotation of the hub shell 43 (rear wheel 7) is impeded even when an attempt is made to push the bicycle, making the bicycle more difficult to move and reducing the likelihood of a theft.

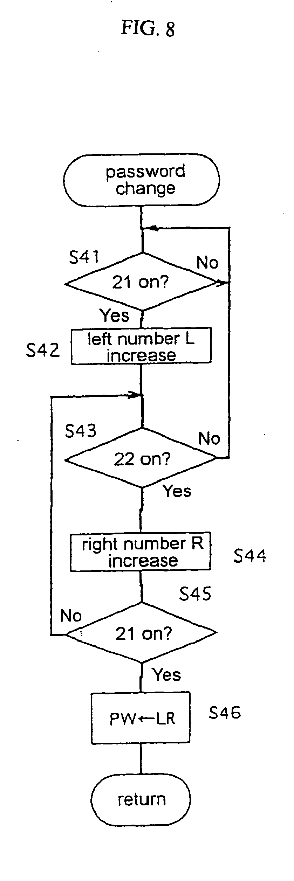

If the password PW has not been registered, the operation proceeds from step S22 to step S31. In step S31, the code registration routine illustrated in Fig. 8 is executed. Here, a decision is made as to whether the control button 21 has been operated in step S41 in Fig. 8. If the control button 21 has been operated, the operation proceeds to step S42, and the left number L (a ten-digit number) is increased by one. In step S43 a decision is made as to whether the control button 22 has been operated. The operation returns to step S41 until the control button 22 is pushed, and the left number L is increased by one. When the control button 22 is operated, the operation proceeds to step S44, and the right number R (a one-digit number) is increased by one. In step S45 a decision is made as to whether the control button 21 was operated again. The operation returns to step S43 until the control button 21 is operated, and the right number R is increased by one. When the control button 21 is operated, the operation proceeds to step S46, and the inputted number LR is stored as the password PW in the memory component 30. A password PW is thus registered after being selected from among 100 two-digit numbers LR ranging from "00" to "99."

The operation proceeds to step S32 if it is decided in step S23 that the control button 21 was operated during unlocking. In step S32 the left number L is increased by one, just as when the password was registered. If it is decided that the control button 22 was operated, the operation proceeds from step S24 to step S33. In step S32, the right number R is increased by one, just as when the password was registered. If the entered number LR matches the password PW in step S25, the operation proceeds to step S34, and the actuation position VP is set to first gear V1. As a result, the sleeve 77 is rotated by the shift motor 29 and positioned at the first gear V1, releasing the engagement between the lock ring 1 14 and the serration teeth 113 of the hub shell 43. As a result, when the bicycle is pedaled, the rotation of the driver 42 is transmitted unchanged to the hub shell 43 via the first one-way clutch 80.

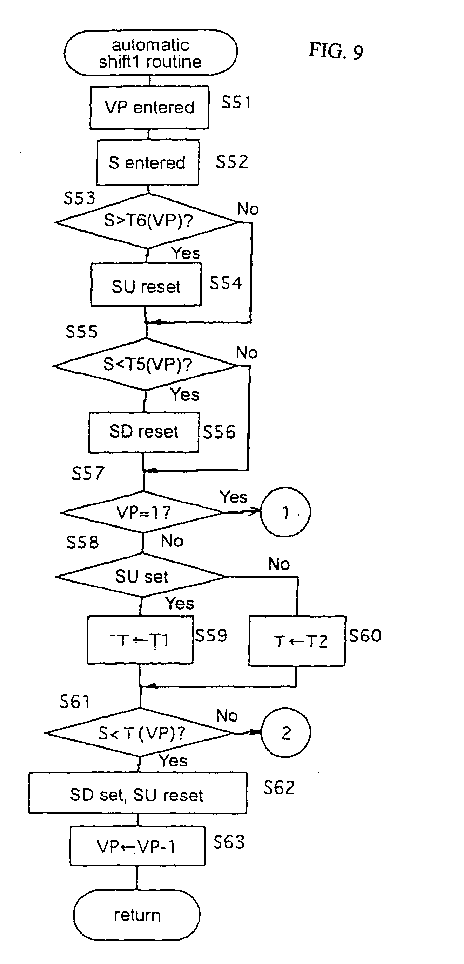

With the automatic shift 1 routine of step S11, the actuation position VP is set to the speed step corresponding to the bicycle speed SP. When the position is different from this, shifts are made one gear at a time toward this. Here, in step S51 in Fig. 9, the actuation position VP of the actuation position sensor 26 is entered. In step S52, the current bicycle speed S is entered based on the speed signal from the bicycle speed sensor 12. In step S53, it is determined whether the currently bicycle speed S thus entered exceeds the cancel speed T6 (VP) at the actuation position VP indicating the current speed step in table 6. As shown above, table 6 is a speed table for canceling (resetting) the upshift mode, and, as shown in Fig. 4, the corresponding value is, for example, 14 km/h when VP = 2.

The upshift mode and the downshift mode will now be described.

The upshift mode is a shift mode established when an upshift is made. Chattering, which involves rapidly alternating upshifts and downshifts, occurs when downshifts are performed at speeds close to those achieved following upshifts. Slower than usual downshifts are performed in the upshift mode to prevent this phenomenon. Table 1 (T1) is the speed table used in the upshift mode. Similarly, the downshift mode is a shift mode established when a downshift is made. Faster than usual upshifts are performed in the downshift mode to prevent chattering during downshifts. Table 4 (T4) is the speed table used in the downshift mode. In addition, table 3 (T3) is used during a regular upshift, and table 2 (T2) is used during a downshift. The two tables 3 and 2 have faster upshift and downshift timing patterns than do tables 4 and 1. Furthermore, table 6 (T6) and table 5 (T5) are speed tables for canceling these upshift and downshift modes and returning to regular shift timing.

The operation proceeds to step S54 if the bicycle speed S exceeds the cancel speed T6 (VP) of table 6. The upshift flag SU indicating that the operation has been set to the upshift mode is reset during step S54. This procedure is skipped if the bicycle speed S does not exceed the cancel speed T6 (VP) of table 6.

In step S55, it is determined whether or not the bicycle speed S is below a cancel speed T5 (VP) corresponding to a speed step of table 5. As described above, this table 5 is a speed table for canceling (resetting) the downshift mode. As shown in Fig. 4, the value is, for example, 14 km/h when VP = 2. The operation proceeds to step S56 if the bicycle speed S is below the cancel speed T5 (VP) of table 5. The downshift flag SD indicating that the operation has been set to a downshift mode is reset during step S56. This procedure is skipped if the bicycle speed S exceeds the cancel speed T6 (VP) of table 6.

In step S57, it is determined whether or not the speed step corresponds to the first gear (whether or not the actuation position is V1). The operation proceeds to step S58 if the speed step corresponds to the first gear. In step S58, it is determined whether or not the upshift flag SU has already been set up, that is, whether or not an upshift mode has been set. The operation proceeds to step S59 if the upshift mode has been established, and table 1 (T1) is selected as the downshift speed table. The operation proceeds to step S60 if the upshift mode has not been established, and table 2 (T2) is selected as the downshift speed table.

It is determined during step S61 whether or not the current bicycle speed S is below a shift speed T (VP) corresponding to a speed step of the selected table. In other words, it is determined whether or not the bicycle speed S has dropped below the shift speed corresponding to the current speed step. If the bicycle speed S has dropped below the shift speed, the operation proceeds to step S62, a downshift flag is set up, a downshift mode is established, an upshift flag SU is set up, and the upshift mode is canceled. During step S63, the actuation position VP is reduced one level in order to downshift the speed step by one level, returning the operation to the main-routine in Fig. 6.

The operation proceeds from step S61 to the step S64 in Fig. 15 if the current bicycle speed S is equal to or greater than a shift speed T (VP) corresponding to a speed step of the selected table. In step S64, it is determined whether or not the actuation position is V4, that is, whether or not the speed step corresponds to the fourth gear. The operation returns to the main routine if the speed step corresponds to the fourth gear. The operation proceeds to step S65 if the speed step does not correspond to the fourth gear, that is, if the speed step corresponds to any of first through third gears. In step S65, it is determined whether or not a downshift flag SD has already been set up, that is, whether the downshift mode has been established. If the downshift mode has been established, the operation proceeds to step S66, and table 4 (T4) is selected as an upshift speed table. If the downshift mode has not been established, the operation proceeds to step S67, and table 3 (T3) is selected as an upshift speed table. In step S68, it is determined whether or not the current bicycle speed S exceeds a shift speed (VP) corresponding to a speed step of the selected table. In other words, it is determined whether or not the bicycle speed S has risen above the shift speed corresponding to the current speed step. If the bicycle speed S has risen above the shift speed, the operation proceeds to step S69, an upshift flag is set up, an upshift mode is established, the downshift flag is reset, and the downshift mode is canceled. During step S70, the actuation position VP is raised one level in order to upshift the speed step by one level, returning the operation to the main routine in Fig. 6.

On the other hand, the operation proceeds to step S65 if it has been determined during step S57 that the speed step corresponds to the first gear.

Specifically, first gear V1 is initially established because of low speed when the automatic shift 1 routine is performed, that is, when the foot is placed on the pedal, and the bicycle starts moving. If no downshift mode has been established, table 3 is selected, and when bicycle speed S exceeds 11 km/h, the speed is upshifted to second gear V2, and an upshift mode is established. If the step S then exceeds 14 km/h, the upshift mode is canceled on the basis of table 6. If the bicycle accelerates even further and the bicycle speed exceeds 16 km/h, the speed is upshifted to third gear V3 on the basis of table 3.

In a reverse case, that is, when the bicycle speed S continues to decrease without exceeding 14 km/h, table 1 is selected because the bicycle is still operating in an upshift mode, and no downshift is performed until the speed drops below 9 km/h. On the other hand, when the bicycle speed S continues to decrease after exceeding 14 km/h, table 2 is selected, and a downshift is performed until the speed drops below 12 km/h. Performing a downshift cancels the upshift mode and establishes a downshift mode. The downshift mode is canceled on the basis of table 5 once the bicycle speed S has dropped below 8 km/h. For this reason, an increase in the bicycle speed S from a level of 8 km/h results in the selection of table 4 and in an upshift to 14 km/h, whereas an increase in the bicycle speed S from a level below 8 km/h results in the selection of table 3 and in an upshift once 11 km/h is exceeded.

Thus, a shift causes the automatic shift 1 routine to enter an upshift mode or a downshift mode, and the shift timing is slowed down in accordance with table 4 or 1 until the speed is increased or reduced to the prescribed cancel speed specified by table 6 or 5, making it possible to prevent chattering even when the shift is made prematurely. Smooth speed switching can thus be accomplished with minimal discomfort.

Here, when the first sun gear 60 is linked to the hub axle 41 by the shift motor 29, the bicycle is in fourth gear, the rotation provided from the hub cog 47 to the driver 42 is increased by the largest gear ratio (which is determined by the number of teeth on the first sun gear 60, the first gear 63a and second gear 63b of the planet gears 63, and the ring gear 64), and this rotation is transmitted to the hub shell 43 via the second one-way clutch 81. When the second sun gear 61 is selected and linked to the hub axle 41, the bicycle is in third gear, the rotation of the driver 42 is increased by a medium (the second largest) gear ratio (which is determined by the number of teeth on the second sun gear 61, the second gear 63b of the planet gears 63, and the ring gear 64), and this rotation is transmitted to the hub shell 43 via the second one-way clutch 81. When the third sun gear 62 is selected and linked to the hub axle 41, the bicycle is in second gear, the rotation of the driver 42 is increased by the smallest gear ratio (which is determined by the number of teeth on the third sun gear 62, the second gear 63b and third gear 63c of the planet gears 63, and the ring gear 64), and this rotation is transmitted to the hub shell 43 via the second one-way clutch 81. If none of the sun gears 60 through 62 is selected, the first gear is engaged as described above, and the rotation of the driver 42 is transmitted directly to the hub shell 43.

Unselected sun gears perform relative rotation in the opposite direction from the forward direction with respect to the hub axle 41. When any one of the sun gears is selected and the speed is increased by the planet gear mechanism 44, the driver 42 and the hub shell 43 perform relative rotation in the direction in which meshing with the first oneway clutch 80 is released.

A detailed description of the automatic shift 2 routine will be omitted because the only difference between this routine and the automatic shift 1 routine are the tables used for the routines. Specifically, tables 1 through 6 are set to lower speeds than in the automatic shift 1 routine.

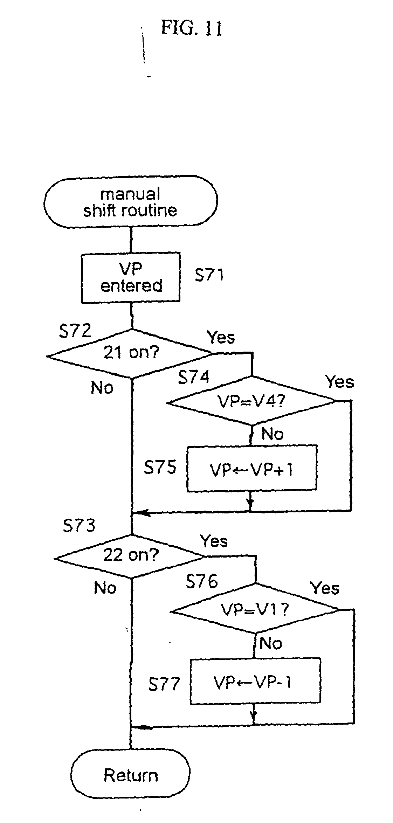

With the manual shift routine of step S11, gear shifts are made one at a time by operation of the control buttons 21 and 22. In step S71 in Fig. 11, the actuation position VP of the actuation position sensor 26 is entered. In step S72, a decision is made as to whether the control button 21 has been operated. In step S73, a decision is made as to whether the control button 22 has been operated. When the control button 21 is operated, the operation proceeds from step S72 to step S74. In step S74, a decision is made as to whether the current actuation position VP is V4, which corresponds to the fourth gear. If the current actuation position VP is not V4, the operation proceeds to step S75, and the actuation position VP is moved one speed step higher, executing a one-step upshift. If the current actuation position VP is V4, this routine is skipped.

When the control button 22 is operated, the operation proceeds from step S73 to step S76. In step S76, a decision is made as to whether current actuation position VP is V1, which corresponds to the first gear. If the current actuation position VP is not V1, the operation proceeds to step S77, and the actuation position VP is moved one speed step lower, executing a one-step downshift. If the current actuation position VP is V1, this routine is skipped.

The present embodiment thus allows an upshift mode and a downshift mode to be established for the automatic shift 1 routine, with shifting performed in accordance with a slower than usual timing pattern, and chattering prevented, until the speed is raised or lowered to a prescribed level when a shift is performed, making it possible to perform automatic shifting with minimal discomfort by means of a simple control procedure based on the use of speed alone without the use of acceleration.
(a) Although the above embodiment was described with reference to an internal shifting hub as a shifting mechanism, the present invention is also applicable to a shifting mechanism in the form of an external shifting mechanism composed of a plurality of sprockets and derailleurs.
(b) Although the above embodiment was described with reference to a shifting mechanism actuated by a shifting motor, the present invention is also applicable to a shifting mechanism actuated by a solenoid, an electric/hydraulic/ pneumatic cylinder, or another actuator.

According to the present invention, an upshift mode or a downshift mode is established when a shift is performed, the speed is changed to a gear different from the regular shift gear, and the pattern shift timing is altered. Specifically, the pattern of shift timing is slowed down such that shifting is performed at lower speeds when a downshift is performed in the upshift mode, and at higher speeds when an upshift is performed in the downshift mode. Regular shift timing is accelerated. As a result, idle post-shifting can be reduced, and comfortable shifting can be performed in accordance with fast shift timing. In addition, comfortable shifting can be accomplished by a simple control procedure because the shift timing is established on the basis of speed alone.

### List of reference numerals

- 1: frame
- 2: frame unit
- 3: front fork
- 4: handle component
- 5: drive component
- 6: front wheel
- 7: rear wheel
- 7a: spokes
- 8: front , rear brake devices
- 9: shift control element
- 10: internal shifting hub
- 11: saddle
- 12: bicyle speed sensor
- 13: magnet
- 14: handle stem
- 15: handlebar
- 16: brake levers
- 17: grips
- 18: gear crank
- 19: chain
- 20: control panel
- 21: control button
- 22: control button
- 23: control dial
- 24: liquid-crystal display component
- 25: shift control component
- 26: actuation position sensor
- 27: power supply
- 28: motor driver
- 29: shift motor
- 30: memory component
- 41: hub axle
- 41 a: stopping protrusion
- 41b: grooves
- 42: driver
- 42a: notch
- 43: hub shell
- 43a: housing space
- 44: planet gear mechanism
- 45: balls
- 46: hub cone
- 47: hub cog
- 50: balls
- 51: balls
- 52: hub cone
- 53,54: flanges
- 55: cover
- 56: saeling member
- 60,61,62: sun gear
- 60a to 62a: our housing spaces
- 63: planet gear
- 63 a: first gear
- 63b: second gear
- 63c: third gear
- 64: ring gear
- 65: support pin
- 70: clutch mechanism
- 71,72,73: drive pawls
- 74, 75, 76: annular wire spring
- 77: sleeve
- 78: operator
- 80: first one-way clutch
- 81: second one-way clutch
- 85: antitheft device
- 91: actuating mechanism
- 94a: drive cam components
- 95: reduction mechanism
- 101: spring washer
- 102: moving cam
- 103: moving member
- 104: moving spring
- 105: engagement tab
- 106: cylindrical cam body
- 107: stopping washer
- 108: cam component
- 113: serration teeth
- 114: lock spring
- 114a: radial irregularities
- 114b: serration teeth
- 115: disk shaped flange component
- 115a: step
- 116: cylindrical component
- 116a: protrusions
- 117: pressure ring
- 118: pressure nut
- 119: coned disk spring

- P: parking mode
- A1: automatic shift 1
- A2: automatic shift 2
- M: manual shift
- VP: actuation position
- V1 to V4: shift position
- PK: locked position
- PW: password
- LR: password
- L: left number
- R: right number
- A, B, C, D, E, S, SP: bicycle speed
- SU: upshift flag
- SD: downshift flag
- T: shift speed

- S1 to S6: steps
- S10 to S14: steps
- S21 to S34: steps
- S41 to S46: steps
- S51 to S63: steps
- S64 to S70: steps
- S71 to S77: steps
- T5, T6: cancel speed

## Claims

1. A method for automatically switching a plurality of speed steps (VP) in a shifting mechanism (10) of a bicycle by a shift control device (9, 12, 25, 30) in accordance with a sensed speed (S) of the bicycle, the method comprising the steps:
entering said sensed bicycle speed (S) to the shift control device (25) by speed input means (12);
switching said speed steps (VP) from a lower step to a higher step by first upshift means (25, 30, T3) when said bicycle speed is in a first speed according to a first speed table (T3);
switching said speed steps (VP) from a higher step to a lower step by first downshift means (25, 30, T2) when said bicycle speed is in a second speed according to a second speed table (T2);
setting an upshift mode by an upshift mode setting means (25, 30) when said speed step (VP) is switched from a lower step to a higher step;
setting a downshift mode by a downshift mode setting means (25, 30) when said speed step (VP) is switched from a higher step to a lower step,
**characterized in that** said speed step (VP) is switched from a lower step to a higher step by a second upshift means (25,30) according to a third speed table (T4) when said downshift mode has been set, and when said bicycle speed reaches a fourth speed (T4) which is higher than the first speed (T3); and
said speed step (VP) is switched from a higher step to a lower step by second downshift means (25, 30) according to a fourth speed table (T1) when said upshift mode has been set, and when said bicycle speed reaches a third speed (T1) which is lower than the second speed (T2).

2. The method according to claim 1 further comprising the steps:
releasing said upshift mode by an upshift mode release means (25, 30) according to a fifth speed table (T6); and releasing said downshift mode by an downshift mode release means (25, 30, T5).

3. The method according to claim 2 further comprising the steps:
cancelling said upshift mode by said upshift mode release means (25,30) according to a sixth speed table (T6) at a fifth speed (T6), which is higher than said second speed (T2); and
cancelling said downshift mode by said downshift mode release means (25, 30, T5) at a sixth speed (T5), which is lower than said first speed (T3).

4. The method according to claim 3 wherein said upshift mode release means (25, 30, T6) and said downshift mode release means (25, 30, T5) have, respectively, a fifth speed group and a sixth speed group provided with respective settings for the fifth and sixth speeds (T5, T6) of each of each of said speed steps.

5. The method according to claim 4, wherein said downshift mode is cancelled by said downshift mode release means (25, 30, T5) when said bicycle speed reaches a speed that conforms to any of the sixth speeds (T5) corresponding to said speed steps of said sixth speed group, or when said first and second upshift means are actuated.

6. The method according to claims 4 or 5 wherein said upshift mode is cancelled when said bicycle speed reaches a speed that conforms to any of the fifth speeds (T6) corresponding to said speed steps of said fifth gear group, or when said first and second downshift means are actuated.

7. The method according to any of the claims 1 to 6 wherein said first and second upshift means (25, 30, T3, T4) have, respectively, a first speed group and a fourth speed group provided with respective settings for said first speed (T3) and said fourth speed (T4), which correspond to an upshift at each of the aforementioned speed steps; and said first and second downshift means (25, 30, T2, T1) have, respectively, a second speed group and a third speed group provided with respective settings for said second and third speeds (T2, T1), which correspond to a downshift at each of the aforementioned speed steps.

## Patentansprüche

1. Verfahren zum automatischen Schalten einer Mehrzahl von Gangstufen (VP) in einem Schaltmechanismus (10) eines Fahrrades durch eine Schaltsteuervorrichtung (9, 12, 25, 30) in Übereinstimmung mit einer abgetasteten Geschwindigkeit (S) des Fahrrades, wobei das Verfahren folgende Schritte beinhaltet:
Zuführen der abgetasteten Fahrradgeschwindigkeit (S) zur Schaltsteuervorrichtung (25) durch eine Geschwindigkeitszuführeinrichtung (12);
Schalten der Gangstufen (VP) von einer niedrigeren Stufe auf eine höhere Stufe durch eine erste Hochschalteinrichtung (25, 30, T3), wenn sich die Fahrradgeschwindigkeit bei einer ersten Geschwindigkeit befindet, und zwar gemäß einer ersten Geschwindigkeitstabelle (T3);
Schalten der Gangstufen (VP) von einer höheren Stufe auf eine niedrigere Stufe durch eine erste Herunterschalteinrichtung (25, 30, T2), wenn sich die Fahrradgeschwindigkeit bei einer zweiten Geschwindigkeit befindet, und zwar gemäß einer zweiten Geschwindigkeitstabelle (T2);
Festlegen eines Hochschaltmodus durch eine Hochschaltmodus-Festlegungseinrichtung (25, 30), wenn die Gangstufe (VP) von einer niedrigeren Stufe auf eine höhere Stufe geschaltet wird;
Festlegen eines Herunterschaltmodus durch eine Herunterschaltmodus-Festlegungseinrichtung (25, 30), wenn die Gangstufe (VP) von einer höheren Stufe auf eine niedrigere Stufe geschaltet wird,
**dadurch gekennzeichnet, dass** die Gangstufe (VP) von einer niedrigeren Stufe auf eine höhere Stufe durch eine zweite Hochschalteinrichtung (25, 30) gemäß einer dritten Geschwindigkeitstabelle (T4) geschaltet wird, wenn der Herunterschaltmodus festgelegt ist, und wenn die Fahrradgeschwindigkeit eine vierte Geschwindigkeit (T4) erreicht, die höher ist als die erste Geschwindigkeit (T3); und
die Gangstufe (VP) von einer höheren Stufe auf eine niedrigere Stufe durch eine zweite Herunterschalteinrichtung (25, 30) gemäß einer vierten Geschwindigkeitstabelle (T1) geschaltet wird, wenn der Hochschaltmodus festgelegt wurde, und wenn die Fahrradgeschwindigkeit eine dritte Geschwindigkeit (T1) erreicht, die niedriger ist als die zweite Geschwindigkeit (T2).

2. Verfahren nach Anspruch 1, welches weiter folgende Schritte beinhaltet:
Aufheben des Hochschaltmodus durch eine Hochschaltmodus-Aufhebungseinrichtung (25, 30) gemäß einer fünften Geschwindigkeitstabelle (T6); und
Aufheben des Herunterschaltmodus durch eine Herunterschaltmodus-Aufhebungseinrichtung (25, 30, T5).

3. Verfahren nach Anspruch 2, welches weiter folgende Schritte beinhaltet:
Aufheben des Hochschaltmodus durch die Hochschaltmodus-Aufhebungseinrichtung (25, 30) gemäß einer sechsten Geschwindigkeitstabelle (T6) bei einer fünften Geschwindigkeit (T6), die höher ist als die zweite Geschwindigkeit (T2); und
Aufheben des Herunterschaltmodus durch die Herunterschaltmodus-Aufhebungseinrichtung (25, 30, T5) bei einer sechsten Geschwindigkeit (T5), die niedriger ist als die erste Geschwindigkeit (T3).

4. Verfahren nach Anspruch 3, bei dem die Hochschaltmodus-Aufhebungseinrichtung (25, 30, T6) und die Herunterschaltmodus-Aufhebungseinrichtung (25, 30, T5) jeweils eine fünfte Geschwindigkeitsgruppe und eine sechste Geschwindigkeitsgruppe aufweisen, die mit den jeweiligen Einstellungen für die fünften und sechsten Geschwindigkeiten (T5, T6) einer jeden der Gangstufen versehen ist.

5. Verfahren nach Anspruch 4, bei dem der Herunterschaltmodus durch die Herunterschaltmodus-Aufhebungseinrichtung (25, 30, T5) aufgehoben wird, wenn die Fahrradgeschwindigkeit eine Geschwindigkeit erreicht, die mit irgendeiner der sechsten Geschwindigkeiten (T5) entsprechend den Gangstufen der sechsten Geschwindigkeitsgruppe übereinstimmt, oder wenn die ersten und zweiten Hochschalteinrichtungen betätigt werden.

6. Verfahren nach Anspruch 4 oder 5, bei dem der Hochschaltmodus aufgehoben wird, wenn die Fahrradgeschwindigkeit eine Geschwindigkeit erreicht, die mit irgendeiner der fünften Geschwindigkeiten (T6) entsprechend den Gangstufen der fünften Ganggruppe übereinstimmt, oder wenn die ersten und zweiten Herunterschalteinrichtungen betätigt werden.

7. Verfahren nach einem der Ansprüche 1 bis 6, bei dem die ersten und zweiten Hochschalteinrichtungen (25, 30, T3, T4) jeweils eine erste Geschwindigkeitsgruppe und eine vierte Geschwindigkeitsgruppe aufweisen, die mit jeweiligen Einstellungen für die erste Geschwindigkeit (T3) und die vierte Geschwindigkeit (T4) versehen sind, was einem Hochschalten bei jedem der zuvor erwähnten Gangstufen entspricht; und die ersten und zweiten Herunterschalteinrichtungen (25, 30, T2, T1) jeweils eine zweite Geschwindigkeitsgruppe und eine dritte Geschwindigkeitsgruppe aufweisen, die mit jeweiligen Einstellungen für die zweiten und dritten Geschwindigkeiten (T2, T1) versehen sind, was einem Herunterschalten bei jeder der zuvor erwähnten Gangstufen entspricht.

## Revendications

1. Procédé de passage de braquet automatique d'une pluralité d'étages de vitesse (VP) dans un mécanisme de passage de braquet (10) d'une bicyclette par un dispositif de contrôle de passage de braquet (9, 12, 25, 30) en conformité avec une vitesse détectée (S) de la bicyclette, le procédé comprenant les étapes consistant àentrer ladite vitesse de bicyclette détectée (S) vers le dispositif de contrôle de passage de braquet (25) par l'intermédiaire d'un moyen d'entrée de vitesse (12) ;passer un braquet desdits étages de vitesse (VP) depuis un étage inférieur vers un étage supérieur par l'intermédiaire de premier moyen de passage à un braquet supérieur (25, 30, T3) lorsque ladite vitesse de bicyclette est à une première vitesse en conformité avec un premier tableau de vitesse (T3) ;
passer un braquet desdits étages de vitesse (VP) depuis un étage supérieur vers un étage inférieur par l'intermédiaire de premier moyen de passage à un braquet inférieur (25, 30, T2) lorsque ladite vitesse de bicyclette est à une deuxième vitesse en conformité avec un deuxième tableau de vitesse
(T2) ;
régler un mode de passage à un braquet supérieur par un moyen de réglage de mode de passage à un braquet supérieur
(25, 30) lorsque ledit étage de vitesse (VP) est passé depuis un étage inférieur vers un étage supérieur ;
régler un mode de passage à un braquet inférieur par un moyen de réglage de mode de passage à un braquet inférieur
(25, 30) lorsque ledit étage de vitesse (VP) est passé depuis un étage supérieur vers un étage inférieur,
**caractérisé en ce que** ledit étage de vitesse (VP) est passé depuis un étage inférieur vers un étage supérieur par un
deuxième moyen de passage à un braquet supérieur (25, 30) en conformité avec un troisième tableau de vitesse (T4) lorsque ledit mode de passage à un braquet inférieur a été réglé, et lorsque ladite vitesse de bicyclette atteint une quatrième vitesse (T4) qui est supérieure à la première vitesse (T3) ; et
ledit étage de vitesse (VP) est passé depuis un étage supérieur vers un étage inférieur par un deuxième moyen de passage à un braquet inférieur (25, 30) en conformité avec un quatrième tableau de vitesse (T1) lorsque ledit mode de passage à un braquet supérieur a été réglé et lorsque ladite vitesse de bicyclette atteint une troisième vitesse (T1) qui est inférieure à la deuxième vitesse (T2).

2. Procédé selon la revendication 1 comprenant en outre les étapes consistant à relâcher ledit mode de passage à un braquet supérieur par un moyen de relâche de mode de passage à un braquet supérieur (25, 30) en conformité avec un cinquième tableau de vitesse (T6) ; et
relâcher ledit mode de passage à un braquet inférieur par un moyen de relâche de mode de passage à un braquet inférieur (25, 30, T5).

3. Procédé selon la revendication 2 comprenant en outre les étapes consistant à annuler ledit mode de passage à un braquet supérieur par ledit moyen de relâche de mode de passage à un braquet supérieur (25, 30) en conformité avec un sixième tableau de vitesse (T6) à une cinquième vitesse (T6) qui est supérieure à ladite deuxième vitesse (T2) ; et
annuler ledit mode de passage à un braquet inférieur par ledit moyen de relâche de mode de passage à un braquet inférieur (25, 30, T5) à une sixième vitesse (T5) qui est inférieure à ladite première vitesse (T3).

4. Procédé selon la revendication 3 dans lequel ledit moyen de relâche de mode de passage à un braquet supérieur (25, 30, T6) et ledit moyen de relâche de mode de passage à un braquet inférieur (25, 30, T5) ont, respectivement, un groupe de cinquièmes vitesses et un groupe de sixièmes vitesses munis de réglages respectifs pour les cinquième et sixième vitesses (T5, T6) de chacun desdits étages de vitesse.

5. Procédé selon la revendication 4, dans lequel ledit mode de passage à un braquet inférieur est annulé par ledit moyen de relâche de mode de passage à un braquet inférieur (25, 30 T5) lorsque ladite vitesse de bicyclette atteint une vitesse qui est conforme à l'une quelconque des sixièmes vitesses (T5) correspondant auxdits étages de vitesses dudit groupe de sixièmes vitesses, ou lorsque lesdits premier et deuxième moyens de passage à un braquet supérieur sont actionnés.

6. Procédé selon la revendication 4 ou 5, dans lequel ledit mode de passage à un braquet supérieur est annulé lorsque ladite vitesse de bicyclette atteint une vitesse qui est conforme à l'une quelconque des cinquièmes vitesses (T6) correspondant auxdits étages de vitesses dudit groupe de cinquièmes vitesses ou lorsque lesdits premier et deuxième moyens de passage à un braquet inférieur sont actionnés.

7. Procédé selon l'une quelconque des revendications 1 à 6 dans lequel lesdits premier et deuxième moyens de passage à un braquet supérieur (25, 30, T3, T4) ont, respectivement, un groupe de premières vitesses et un groupe de quatrièmes
vitesses munis de réglages respectifs pour ladite première vitesse (T3) et ladite quatrième vitesse (T4) qui correspondent à un passage à un braquet supérieur au niveau de chacun des étages de vitesse mentionnés ci-dessus ; et lesdits premier et deuxième moyens de passage à un braquet inférieur (25, 30, T2, T1) ont, respectivement, un groupe de deuxièmes vitesses et un groupe de troisièmes vitesses prévus avec des réglages respectifs pour lesdites deuxième et troisième vitesses (T2, T1) qui correspondent à un passage à un braquet inférieur au niveau de chacun des étages de vitesse mentionnés ci-dessus.
